# EUROPEAN PATENT SPECIFICATION

(11) **EP 4 621 446 B1**
(45) Date of publication and mention of the grant of the patent: **25.11.2026**
(21) Application number: 25154827.7
(22) Date of filing: 29.01.2025
(51) Int. Cl.: G01T 1/24, G01T 1/02, G01T 7/00

(54) **RADIATION SENSORS FOR DEEP SPACE ENVIRONMENT**
STRAHLUNGSSENSOREN FÜR DIE UMGEBUNG IM TIEFEN RAUM
CAPTEURS DE RAYONNEMENT POUR ENVIRONNEMENT SPATIAL PROFOND

(30) Priority: 20.03.2024 US 202463567653 P
(43) Date of publication of application: 24.09.2025
(73) Proprietor: National Central University, Taoyuan City 320317 (TW)
(72) Inventor: Chang, Loren Cheewei, 320317 Taoyuan City (TW); Lin, Wei-Yi, 320317 Taoyuan City (TW); Chou, Yi-Hsuan, 320317 Taoyuan City (TW); Hou, Kai-Jie, Chiayi City (TW); Lin, Jen-Siang, 320317 Taoyuan City (TW); Lung, Chieh, 320317 Taoyuan City (TW); Chou, Hui-Hui, 320317 Taoyuan City (TW); Gacal, Glenn Franco Barroso, 1630 Taguig City Metro Manila (PH); Wang, Yu-Shun, 320317 Taoyuan City (TW); Hung, Tzu-Wei, 320317 Taoyuan City (TW); Chen, I, 320317 Taoyuan City (TW); Lee, Shih-Pin, 320317 Taoyuan City (TW); Chiu, Yi-Chung, 320317 Taoyuan City (TW)
(74) Representative: Lang, Christian

(56) References cited:
- TSCHERNE CHRISTOPH ET AL: "Development of a Miniaturized Reference Dosimeter Payload for SmallSat Applications", PROCEEDINGS OF THE 2021 21TH IEEE EUROPEAN CONFERENCE ON RADIATION AND ITS EFFECTS ON COMPONENTS AND SYSTEMS (RADECS), 13 September 2021 (2021-09-13), pages 1 - 6, XP034232596, DOI: 10.1109/RADECS53308.2021.9954463
- KUMARI PREETI ET AL: "Wireless Passive Radiation Dosimeter Using Flash Memory", PROCEEDINGS OF THE 2018 6TH IEEE INTERNATIONAL CONFERENCE ON WIRELESS FOR SPACE AND EXTREME ENVIRONMENTS (WISEE), 11 December 2018 (2018-12-11), pages 239 - 245, XP033516569, DOI: 10.1109/WISEE.2018.8637339
- ERIK KERSTEL ET AL: "Nanobob: A Cubesat Mission Concept For Quantum Communication Experiments In An Uplink Configuration", ARXIV.ORG, CORNELL UNIVERSITY LIBRARY, 201 OLIN LIBRARY CORNELL UNIVERSITY ITHACA, NY 14853, 6 November 2017 (2017-11-06), pages 1 - 34, XP081285516, DOI: 10.48550/arXiv.1711.01886
- FRANCISCO J FRANCO ET AL: "A Portable Low-Cost SEU Evaluation Board for SRAMs", PROCEEDINGS OF THE 2007 IEEE SPANISH CONFERENCE ON ELECTRON DEVICES, 1 January 2007 (2007-01-01), pages 165 - 168, XP031115283, ISBN: 978-1-4244-0868-9, DOI: 10.1109/SCED.2007.384018
- GOHL STEFAN ET AL: "Study of the radiation fields in LEO with the Space Application of Timepix Radiation Monitor (SATRAM)", ADVANCES IN SPACE RESEARCH, vol. 63, no. 5, 6 February 2019 (2019-02-06), pages 1646 - 1660, XP085591990, ISSN: 0273-1177, DOI: 10.1016/J.ASR.2018.11.016

## Description

### FIELD OF THE INVENTION

The present application relates to a radiation sensor for deep space , particularly a radiation sensor for deep space which is capable of surviving high-intensity radiation, high-energy particles, extreme temperatures, heavy mechanical loads, and severe vibrations.

### BACKGROUND OF THE INVENTION

Deep space exploration refers to space exploration missions executed away from the low Earth orbit, below 2000 kilometers altitude, and entering high Earth orbit, interplanetary space, and cislunar space, typically involving the exploration of the Moon and other celestial bodies beyond the Moon. Deep space is significantly different from near-Earth orbit environments, with longer exploration periods in deep space, potentially exposing deep space sensors to space conditions in a deep space orbit worse than the space conditions in a near-Earth orbit.

The deep space is filled with high-energy radiation fields, impacts from solar energetic particles (SEP), photons, galactic cosmic rays (GCR), highdensity high-energy plasma from coronal mass ejections, and induced radiation fields on celestial surfaces, all of which may degrade or even disable the performance of function materials and components in deep space sensors, and may cause physiological responses on astronauts such as cataracts, neurological disorders, and decreased immunity.

In deep space , ionizing radiation poses a major hazard to the safety of sensors and astronauts during space travel. Due to the deep space extending outside of the Earth's magnetosphere and the lack of the protection of the Earth's magnetic field and atmosphere, the deep space is subject to high fluxes of ionizing electromagnetic and particle radiation. The ionizing radiation environment may be divided into three domains based on the sensor's flight in the deep space: First, the space radiation environment during the journey from Earth to other planets, primarily due to solar energetic particles and galactic cosmic rays; Second, the radiation environment during the sensor's descent onto deep space celestial bodies, mainly from solar energetic particles and galactic cosmic rays captured by the celestial magnetic fields; Third, the radiation environment on the surface of deep space celestial bodies where the sensors land, primarily consisting of secondary radiation produced after the celestial bodies absorb cosmic radiation, mainly composed of high-energy and heavy particles.

Astronauts are exposed to radiation doses from deep space within their bodies, and the longer they stay in deep space radiation environments, the greater the impact. Absorption of high-energy particles, photons, and cosmic rays damage astronauts' cells, cause DNA mutations, and increase the risk of cancer, due to exposure leading to the destruction of the molecular structures within most organisms. Radiation may penetrate living tissues, causing short-term or long-term damage to bone marrow stem cells, leading to chromosomal abnormalities in lymphocytes, which are central to the immune system and if damaged, may lead to degraded immunity to viruses previously suppressed in the body. Additionally, T cells in lymphocytes are less likely to regenerate correctly in space, and even if they do regenerate, they struggle to resist infections. Thus, astronauts' ability to resist diseases decreases, and in the confined space of the spacecraft, the disease infection risk among crew members is also increased.

The sensors will encounter high-energy charged particle radiation from solar energetic particles and galactic cosmic rays in the deep space, as well as high energy solar electromagnetic radiation. When the sensors operate near planetary bodies and their satellites, they may also be subjected to low-energy charged particle radiation from induced radiation belts and neutron radiation on the surface of the celestial bodies. The severe radiation environments of deep space will cause more severe degradation effects on the sensitive materials and components of the sensors compared to the degradation effects in Low Earth Orbit. Under prolonged exposure to deep space radiation environments, the performance of sensitive materials such as thermal control materials, solar cells, optical materials, insulating materials, and sealing materials in the sensors will severely degrade, including degradations in optical, electrical, and mechanical properties, as well as degradations in insulation and sealing capabilities; electronic components will also encounter single event effects and total ionizing dose effects.

Single Event Effects (SEE) refer to a series of anomalous effects caused by high-energy charged particles passing through microelectronic components, causing abnormal changes or damage to the component's logic state or functionality due to the charges collected by electrodes of the sensitive component. SEEs may alter the logic bit(s) of computers and may also cause permanent destructive damage. The occurrence of SEEs is a matter of probability with each strike by an energetic particle. Prolonged radiation exposure, referred to as Total Ionizing Dose (TID), may also gradually alter the performance of electronic products. When the circuit receives a certain level of Total Ionizing Dose, the circuit will cease normal function and will eventually result in permanent failure.

A common class of SEEs is the Single Event Upset (as called SEU), wherein the SEU is a single high-energy particle applied on a semiconductor component, causing abnormal changes in the component's logic state. The SEU is the most common and typical among various SEEs caused by space radiation, primarily occurring in data storage or instruction-related components. The component errors caused by the SEU are considered "soft errors," which may be restored to normal condition through system reset, re-powering, or rewriting. However, SEUs can cause data corruption, anomalous software state transitions, or software hangs and crashes.

Another common class of SEEs is the Single-Event Latch-up (SEL), a phenomenon where a single high-energy particle penetrates the semiconductor structure, causing its parasitic structure to mutate, resulting in a low impendence state and overcurrent, and potentially permanently lose its function if not power cycled promptly. This primarily affects CMOS components, for example, a siliconcontrolled rectifier originally with a PNPN four-layer structure, where a single charged particle induces a transient current, triggering the silicon structure to conduct, breaking down into a stacked PNP transistor and NPN transistor. A single-event latch-up can potentially cause irreparable damage to electronic components. Unlike the SEU, it is considered a "hard error" that causes physical hardware damage, making repairs in space even more challenging, thus posing a significant challenge for space radiation detection.

Therefore, both astronauts and electronic components are affected by high-energy radiation from deep space. Consequently, providing a radiation sensor which is capable of tolerating and recovering from SELs , SEU, and TID for use in deep space is a challenging problem that technical experts in this field seek to solve.

TSCHEME CHRISTOPH ET AL, "Development of a Miniaturized Reference Dosimeter Payload for SmallSat Applications" (PROCEEDINGS OF THE 2021 21TH IEEE EUROPEAN CONFERENCE ON RADIATION AND ITS EFFECTS ON COMPONENTS AND SYSTEMS (RADECS), 13 September 2021 (2021-09-13), pages 1-6) disclose a TID Reference Dosimeter and SEU Assessment System, an autonomous, miniaturized dosimetry payload for SmallSat applications and provide information on the concept, performance and the current status of its development, including preparations for the payload's first in-orbit demonstration onboard the Austrian CubeSat PRETTY.

KUMARI PREETI ET AL ("Wireless Passive 1-10 Radiation Dosimeter Using Flash Memory", PROCEEDINGS OF THE 2018 6TH IEEE INTERNATIONAL CONFERENCE ON WIRELESS FOR SPACE AND EXTREME ENVIRONMENTS (WISEE), 11 December 2018 (2018-12-11), pages 239-245) demonstrate a technique to utilize commercial off-the-shelf Flash memory for radiation dosimetry application. In particular, it is demonstrated that the state-of-the-art Flash chips are not only sensitive to ionizing radiation (data corruption starts at the dose of 100 rad (SIO2)) but also selective enough to distinguish X-ray vs Gamma-ray exposure. Sensitivity of the dosimeter is measured by correlating data corruption rate, while selectivity is achieved by utilizing dose enhancement effect and relative response from fresh vs worn-out memory blocks. Finally, an algorithm is introduced for smart phone applications that can potentially be used for real-time wireless radiation dosimetry.

### SUMMARY OF THE INVENTION

An objective of the present application is to provide a radiation sensor for use in deep space, which is capable of operating under conditions of high-intensity radiation, high-energy particles, extreme temperatures, severe vibrations and mechanical loads, while being capable of making measurements of ionizing radiation dose, dose rate, and single event upset count in deep space, while also being tolerant of SEUs and single-event latch-ups.

To achieve the aforementioned objectives, the present application provides a radiation sensor for deep space according to claim 1, comprising a circuit board, a payload control module disposed on the circuit board, the payload control module including a temperature sensing unit; a radiation sensitive field-effect transistor readout module disposed on the circuit board and electrically connected to the payload control module, the temperature sensing circuit measuring both temperatures of the temperature sensing circuit and the radiation sensitive field-effect transistor readout module and preventing voltage fluctuations unrelated to radiation in the radiation sensitive field-effect transistor readout module; and a flash memory integrated circuit (IC) disposed on the circuit board and electrically connected to both the payload control module and the radiation sensitive field-effect transistor readout module. The flash memory includes a detection software. Wherein the flash memory stores sensor data under an ionizing radiation environment from 0 to 100,000 rads, and meets at least one bit flip based on SEU. The detection software instantly detects and records a position of the bit in the flash memory where the SEU occurred, resets the data affected by the SEU, and records a bit quantity of bit errors. By sweeping and resetting the bits affected by SEUs, the detection software is configured to sense the effects of cosmic ray heavy ions or solar energetic particles on flash memory and related computer memory, which may be referenced for a future spacecraft avionics design.

The present application provides an embodiment, which further includes a chassis disposed around the outside of the circuit board, with one side of the chassis including a through hole and a first hollowed-out part adjacent to the through hole; a front plate member disposed on the chassis, which has a second hollowed-out part; and at least one fixed member, disposed between the front plate member and the circuit board, configured to secure the circuit board and space the circuit board and the front plate member by a fixed distance.

The present application provides an embodiment, which further includes a plurality of thermal insulation collars, disposed on the front plate member.

The present application provides an embodiment, further including an electrical interface, disposed on the circuit board to electrically connect the payload control module and the radiation sensitive field-effect transistor readout module; and a data interface, disposed on the circuit board electrically connecting the payload control module and the radiation sensitive field-effect transistor readout module.

The present application provides an embodiment, wherein the electrical interface further includes a transformer, which is electrically connected to the payload control module; a first electronic fuse, which is electrically connected to the radiation sensitive field-effect transistor readout module; and a second electronic fuse, which is electrically connected to the transformer. Wherein, radiation sensitive field-effect transistor readout module if the ionizing radiation environment generates a single-event latch-up, it is cleared by power cycling using either the first or second electronic fuse.

The present application provides an embodiment, wherein the first electronic fuse is electrically connected to a first input power source, and the second electronic fuse is electrically connected to a second input power source.

The present application provides an embodiment, where the circuit board is correspondingly disposed in an aircraft, a rocket, or an artificial satellite.

The present application provides an embodiment, wherein the front plate member is correspondingly disposed on a surface of an aircraft, a rocket, or an artificial satellite.

The present application provides an embodiment that includes a multi-layer insulation member, which is disposed on the exterior of the chassis and encircle the chassis, configured for temperature regulation.

The present application provides an embodiment where the top plate of the chassis is coated with a UV-resistant white coating to serve as a heat radiating front plate member.

To this end, a radiation sensor for use in deep space is provided, solving a problem desired to be solved by the skilled one in the space sciences.

### BRIEF DESCRIPTION OF DRAWINGS

FIG. 1 which is a block diagram of an embodiment of the present application;
FIG. 2 which is a system block diagram of an embodiment of the present application;
FIG. 3 which is a block diagram of an embodiment of the present application;
FIG. 4 which is a top view schematic of the present application;
FIG. 5 which is a structural diagram of the front plate member of the present application;
FIG. 6 which is a side view schematic of the present application;
FIG. 7 which is a comparison chart of the random vibration power spectral density of the present application;
FIG. 8A which is a schematic diagram of the sine test for the X-axis and Y-axis of the present application;
FIG. 8B which is a schematic diagram of the sine test for the Z-axis of the present application;
FIG. 9 which is a schematic diagram of the thermal test of the present application;
FIG. 10 which is a schematic diagram of the radiation test results of the present application; and
FIG. 11 which is a schematic diagram of the proton beam irradiation test results of the present application.

### DETAILED DESCRIPTION OF THE INVENTION

In order to provide the esteemed reviewers with a further understanding and recognition of the features and effects achieved by the present application, a preferred embodiment is presented along with a detailed description as follows:

Due to the deep space being filled with high-energy mixed space radiation fields, detecting radiation doses is an important part of deep space exploration or detection. However, high-energy radiation may cause errors in electronic components and prevent the radiation sensor from accurately measuring the radiation doses in deep space. Incorrect radiation doses may easily lead to erroneous judgments by astronauts or central control computers, thereby posing a danger to astronauts or spacecraft.

The radiation sensor of the present application, applied in the deep space, is not only capable of handling high-intensity radiation, high-energy particles, extreme temperatures, and intense vibrations but also capable of detecting and repairing SEUs in electronic components while measuring radiation doses. This prevents accidents caused by incorrect radiation dose measurements or control sequence corruption due to SEUs in the deep space.

In the following text, various embodiments of the present application will be described in detail through diagrams. However, the concepts of the present application may be embodied in many different forms and should not be construed as limited to the exemplary embodiments set forth herein.

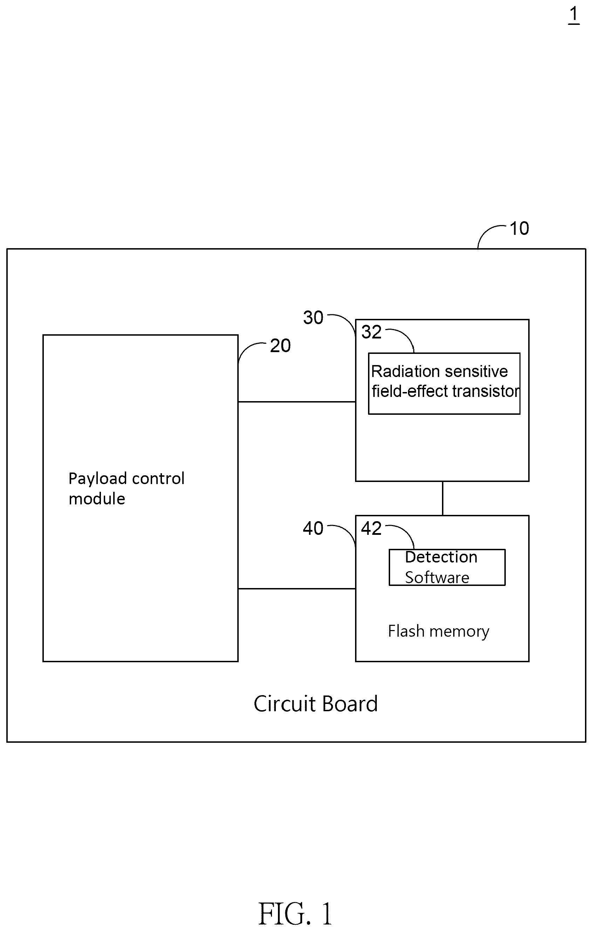

First, the circuit part of the present application will be described. Please refer to FIG. 1, which is a block diagram of an embodiment of the present application, as shown in the figure. Subsequently, a detailed description will be given of a radiation sensor 1 for deep space, comprising a circuit board 10; a payload control module 20 disposed on the circuit board 10; a radiation sensitive field-effect transistor readout module 30 disposed on the circuit board 10 and electrically connected to the payload control module 20; and a flash memory 40 disposed on the circuit board 10 and electrically connected to both the payload control module 20 and the radiation sensitive field-effect transistor readout module 30, the flash memory 40 also includes a detection software 42, wherein the sensing data stored in the flash memory, under a higher ionizing radiation environment ranging from 0 to 100,000 rads, at least one bit of the sensing data undergoes a SEU, and the detection software 42 instantly detects and records the position of the bit in the flash memory 40 where the SEU occurred, the detection software 42 resets the data where the SEU occurred and records the number of bit errors.

Continued to above, the present application senses radiation in deep space through the radiation sensitive field-effect transistor readout module 30, wherein the radiation sensitive field-effect transistor readout module 30 includes a radiation sensing field-effect transistor 32, the radiation sensing field-effect transistor 32 is a P-channel MOSFET optimized for radiation sensitivity, the radiation sensing field-effect transistor 32 is specially designed to be sensitive to high-energy (ionizing) radiation, and it exhibits different threshold voltages depending on the dose of ionizing radiation, allowing the absorbed radiation dose to be inferred from its threshold voltage, the present application involves recording the voltage of this type of microelectronic chip at specified time intervals and calculating the ionizing radiation dose from the recorded threshold voltage, the method of calculation may be refined by comparing the recorded voltage with calibration data obtained under simulated laboratory conditions, thereby estimating the ionizing radiation dose, but is not limited to this method.

Continued to above, the present application utilizes the detection software 42 within the flash memory 40 to sense SEUs, while simultaneously using the flash memory 40 for data storage. The flash memory 40 not only has superior dynamic shock resistance, preventing data loss from severe shaking, but also when made into a memory card, it is extremely robust and may withstand high pressure and extreme temperatures. Additionally, as a non-volatile solid-state storage, it does not consume power during file storage, offering numerous advantages for deep space exploration.

However, even without the influence of ionizing radiation, data retention errors and interference with read/write operations may cause inaccuracies in the flash memory 40. Therefore, it is necessary to regularly perform error detection and correction on the flash memory 40. For the flash memory 40, one correction and two error detections per word are deemed sufficient.

Continued to above, in addition to its data storage capabilities, the flash memory 40, when exposed to high ionizing radiation in space, meets SEUs due to cosmic ray heavy ions or solar energetic particles. Consequently, the detection software 42 within the flash memory 40 promptly detects and records the location of the bit affected by the SEU. The detection software 42 resets the data affected by the SEU and records the number of bit errors.

Continued to above, the present application controls the payload through the payload control module 20. When the payload control module 20 is activated, the payload enters scientific mode, regularly generating and recording a plurality of management data packets. The packets include the health status data of the payload and the last recorded scientific data. The health status data corresponds to whether there are errors in the software of the payload control module 20, while the scientific data corresponds to the voltage changes detected by the radiation sensor field-effect transistor 32 and the number of SEUs detected by the detection software 42 in the flash memory 40.

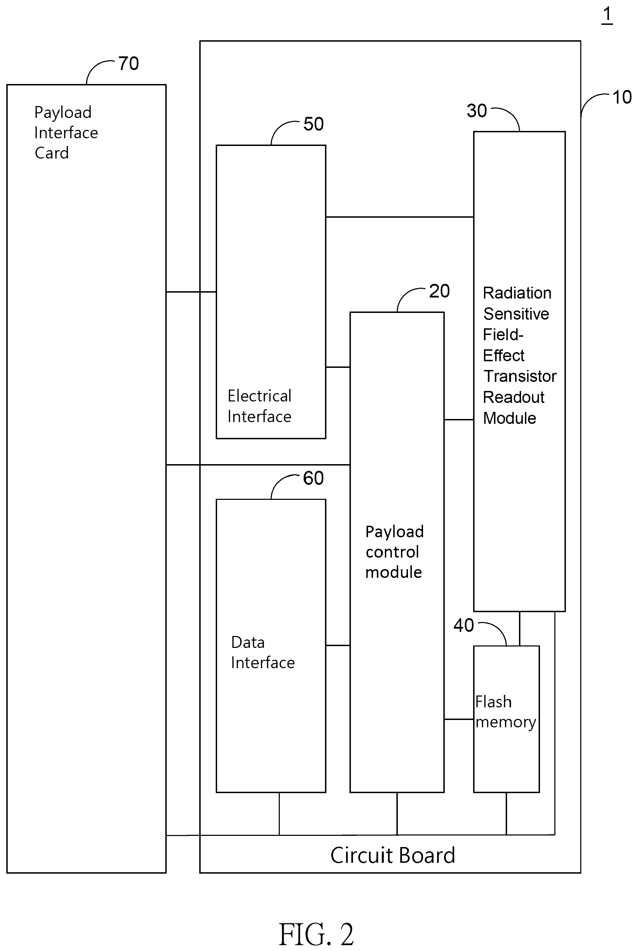

Please refer to FIG. 2, which is a system block diagram of an embodiment of the present application. As shown in the figure, the present application is applied to a radiation sensor 1 in deep space, which further includes an electrical interface 50 disposed on the circuit board 10 and electrically connected to the payload control module 20 and the radiation sensitive field-effect transistor readout module 30; and a data interface 60 disposed on the circuit board 10 and electrically connected to the payload control module 20 and the radiation sensitive field-effect transistor readout module 30.

Continued to the above, the electrical interface 50 further includes a transformer 52, which is electrically connected to the payload control module 20; a first electronic fuse 54, which is electrically connected to the radiation sensitive field-effect transistor readout module 30; and a second electronic fuse 56, which is electrically connected to the transformer 52; where the first electronic fuse 54 and the second electronic fuse 56 are configured to restore an SEL.

Continued to the above, the present application provides a mechanism for autonomous recovery of SELs through the first electronic fuse 54 and the second electronic fuse 56. SELs cause high currents in electronic components, leading to their failure, which may only be cleared by restarting the power supply. Therefore, when the first electronic fuse 54 or the second electronic fuse 56 detects excessive current, it will temporarily disconnect the power supply to facilitate a power restart to recover from the SEL.

Continued to the above, when applied in spacecraft, rockets, or artificial satellites, the radiation sensor 1 of the present application connects to an external payload interface card 70 of the spacecraft, rocket, or artificial satellite. The data interface 60 of the present application is configured to convert the data protocol of the payload control module 20 to that of the external payload interface card 70, allowing data to be transferred between the payload control module 20 and the external payload interface card 70.

Continued to the above, the radiation sensor 1 of the present application, when configured for deep space , may be disposed in a spacecraft, rockets, or artificial satellites and interconnected with their own systems to achieve the effect of radiation sensing.

In this embodiment, the data interface 60 consists of a transceiver integrated circuit (not shown in the figure) and an auxiliary circuit (not shown in the figure), but is not limited to this configuration.

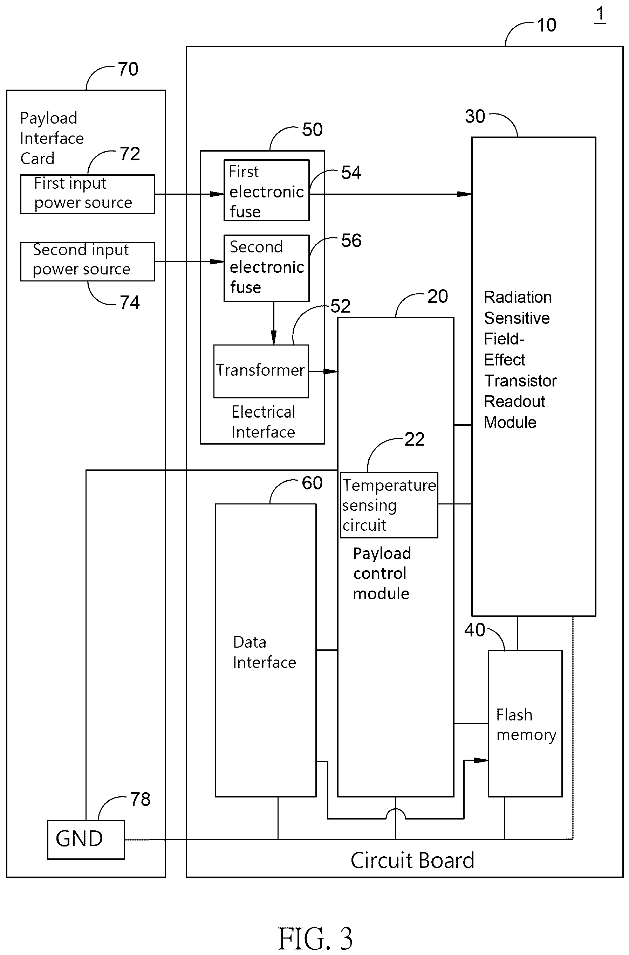

Continued to the above, please refer to FIG. 3, which is a schematic diagram of the external payload interface card of the present application. As shown in the figure, the radiation sensor 1 for deep space of the present application is connected to the external payload interface card 70 of the spacecraft, rocket, or artificial satellite. The external payload interface card 70 further includes a first input power source 72, electrically connected to the first electronic fuse 54; a second input power source 74, electrically connected to the second electronic fuse 56; and a ground terminal 78, electrically connected to the data interface 60, the payload control module 20, the radiation sensitive field-effect transistor readout module 30, and the flash memory 40.

Continued to the above, the present application provides a mechanism for autonomous recovery from SELs through the first electronic fuse 54 and the second electronic fuse 56. SELs may cause high currents in electronic components, leading to their failure, which may only be cleared by power cycling. Therefore, when the first electronic fuse 54 or the second electronic fuse 56 detects excessive current, it will temporarily disconnect the first input power source 72 or the second input power source 74 to facilitate power cycling of the first input power source 72 or the second input power source 74 to recover from the SEL.

In this embodiment, the first input power source 72 is 12V, which is used as the power supply for the radiation sensitive field-effect transistor readout module 30. The required input voltage for the radiation sensitive field-effect transistor readout module 30 is 12V, thus eliminating the need for a transformer 52 to adjust the voltage. Meanwhile, the second input power source 74 is 5V, and through the transformer 52, the voltage of the second input power source 74 is adjusted to 3.3V, which is used as the power supply for the payload control module 20. Here, 3.3V is the input voltage required by most electronic components in this embodiment, apart from the radiation sensitive field-effect transistor readout module 30, and this example does not specifically limit the input voltage of the components of the present application.

In this embodiment, when the first electronic fuse 54 or the second electronic fuse 56 detects excessive current, it will disconnect the 12V first input power source 72 or the 5V second input power source 74 to prevent the radiation sensor 1 for deep space from being damaged or destroyed by the high overcurrent caused by SELs, thereby protecting the radiation sensor 1 for deep space.

In this embodiment, the flash memory 40 is electrically connected to the data interface 60, enabling the data interface 60 to read or store the data stored in the flash memory 40 for future retrieval.

According to the present invention, the payload control module 20 additionally includes a temperature sensing circuit 22 to measure both its own and the radiation sensitive field-effect transistor readout module 30's temperatures, to prevent voltage fluctuations unrelated to radiation in the radiation sensitive field-effect transistor readout module 30.

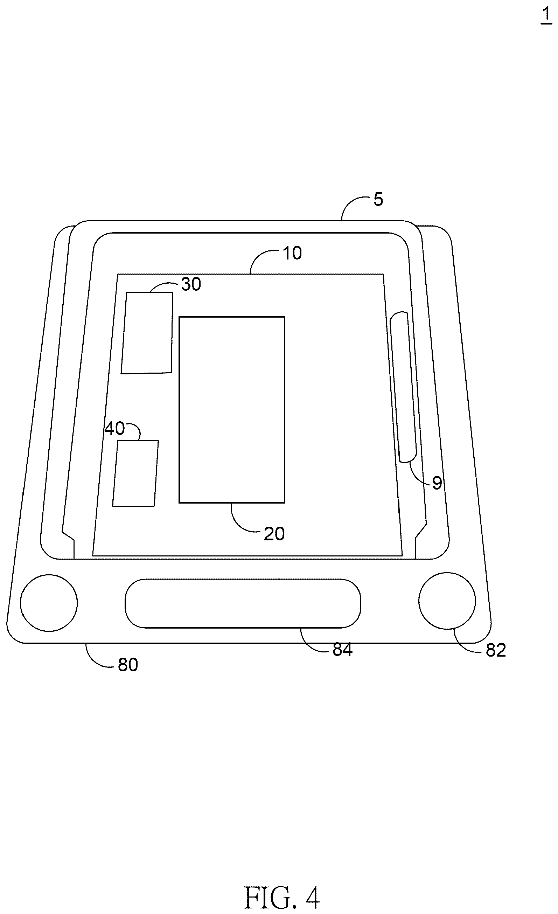

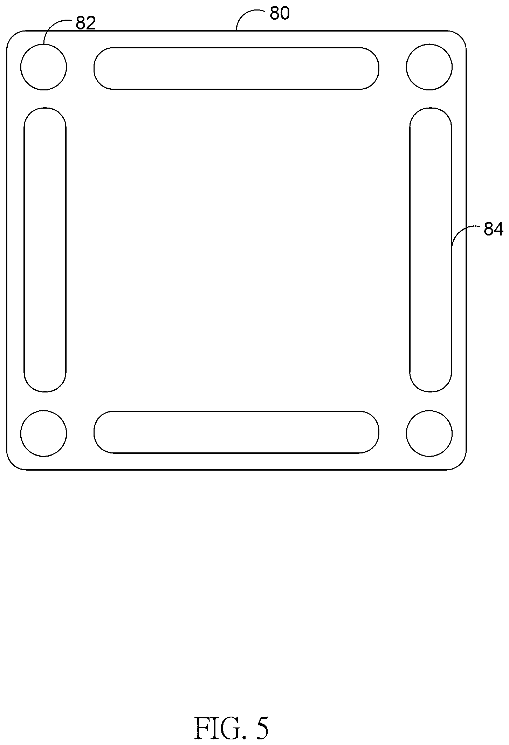

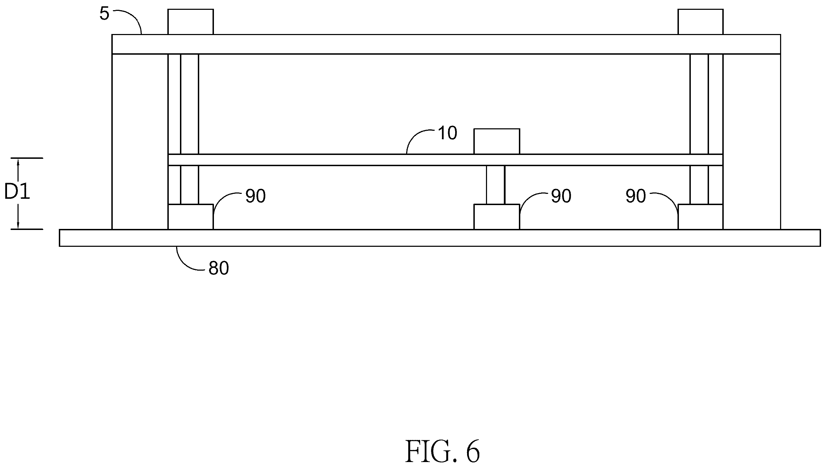

The structural part of the present application will now be described, please refer to FIG. 4, FIG. 5, and FIG. 6. FIG. 4 is a top view schematic of the present application, FIG. 5 is a schematic of the board structure, and FIG. 6 is a side view schematic of the present application. As shown in the figures, the present application is applied to a radiation sensor 1 for deep space, which further includes a chassis 5 with a through hole on one side (not shown in the figure) and a first hollow section 9 adjacent to the through hole. A circuit board 10, which is disposed in the chassis 5. A payload control module 20, which is disposed on the circuit board 10. A radiation sensitive field-effect transistor readout module 30, which is disposed on the circuit board 10 and is electrically connected to the payload control module 20. And a flash memory 40, which is also disposed on the circuit board 10 and is electrically connected to both the payload control module 20 and the radiation sensitive field-effect transistor readout module 30. A front plate member 80, which is disposed on the chassis 5, and this front plate member 80 has a second hollow section 84. And at least one fixed member 90, which is placed between the front plate member 80 and the circuit board 10, and this at least one fixed member 90 is configured to secure the circuit board 10 and space the circuit board 10 and the front plate member 80 by a first distance D1. In which, the radiation sensitive field-effect transistor readout module 30 senses the radiation intensity in the higher ionizing radiation environment and causes a critical voltage increase. The flash memory 40 detects and records the critical voltage of the radiation sensitive field-effect transistor readout module 30. And the number of SEUs occurring in the flash memory 40. The flash memory 40 resets the data where the SEUs occurred. The present application protects the circuit board 10, the payload control module 20, the radiation sensitive field-effect transistor readout module 30, and the flash memory 40 by positioning the circuit board 10 inside the chassis 5. Simultaneously, the chassis 5 provides thermal insulation and vibration protection for the circuit board 10, the payload control module 20, the radiation sensitive field-effect transistor readout module 30, and the flash memory 40.

In this embodiment, since the radiation sensor 1 for deep space of the present application is directly exposed to space, it is necessary to ensure that all electronic components may maintain their temperature within the loadable range to prevent any electronic component from malfunctioning due to temperature changes. Additionally, it is essential to ensure that the total mass of the radiation sensor 1 for deep space does not exceed 400 grams and the total power consumption is less than 900 milliwatts. Regarding temperature, since the spacecraft has a side facing the sun and a side facing away from the sun, the side facing the sun will continue to heat up, and the side facing away from the sun will continue to cool, thus creating more extreme temperature differences.

Therefore, please refer back to FIG. 5, as shown in the figure, in this example, a front plate member 80 is disposed on the chassis 5; and a plurality of thermal insulation collars 82 are disposed on the front plate member 80, which further reduce the low temperature effects conducted between the internal electronic components and the spacecraft through the installation of the thermal insulation collars 82.

Following the above, the radiation sensor 1 for deep space of the present application may be disposed on the outer surface of a spacecraft, rocket, or artificial satellite and interconnected with its own system to achieve the effect of the radiation sensor. Due to the harsh environment on the outer surface of the spacecraft, rocket, or artificial satellite, the chassis 5 and at least one fixing component 90 are configured to fix and protect the circuit board 10, to prevent physical damage and reduce the impact of vibration and temperature on the radiation sensor 1 for deep space.

Since the internal electronic components may not operate normally in environments below zero degrees Celsius, this embodiment further includes an external heater (not shown in the figure). When the temperature sensing circuit 22 detects a temperature below zero degrees Celsius, the external heater is activated to address the harsh low-temperature environment, allowing the internal electronic components to function properly.

Due to the need to withstand the vibrations caused by the launch and flight of the spacecraft, in this embodiment, the maximum static load factor required for the radiation sensor 1 for deep space is 33G on the Z-axis and 30G on the XY plane, where G represents the acceleration due to gravity, 9.8 meters per second squared.

Due to the requirements of the spacecraft equipment regulations, in this embodiment, the radiation sensor 1 for deep space needs to weigh less than 400 grams. Therefore, referring to FIG. 4 and FIG. 5, in this embodiment, a plurality of first hollow sections 9 and a plurality of second hollow sections 84 are designed on the chassis 5 and the front plate member 80, and are fixed with several screws to provide mechanical load in the flight environment.

Subsequently, referring to FIG. 6, as shown in the figure, the radiation sensor 1 for deep space further includes at least one fixing component 90, which is disposed between the front plate member 80 and the circuit board 10. This at least one fixing component 90 is configured to secure the circuit board 10 and space the circuit board 10 and the front plate member 80 by a first distance D1, ensuring that the circuit board 10 does not directly contact the front plate member 80, and also serves as a thermal insulator.

Continued to above, the present application may also incorporate a multi-layer insulation member, which is placed on the exterior of the chassis 5 and encircle it. The multi-layer insulation member are configured to regulate temperature. In this embodiment, the multi-layer insulation member may also be stacked in a plurality of layers to enhance the temperature regulation effect, thereby preventing the electronic components from reaching their operational temperature due to excessively high or low temperatures, which could lead to the electronic components ceasing to function or becoming damaged.

Continued to above, the present application may also apply a white coating with a UV resistance on the surface of the chassis 5, which serves as a heat dissipater and as a heat radiation front plate member for the radiation sensor 1 in deep space . This helps prevent the electronic components from reaching their operational temperature due to excessively high or low temperatures, which could lead to the electronic components ceasing to function or becoming damaged.

Continued to the above, please refer to the following Table (1).

| Result in the present application | | SpaceX Rideshare Maximum Predicted Environment | |
|---|---|---|---|
| Band (Hz) | Power spectral density (g²/Hz) | Band (Hz) | Power spectral density (g² /Hz) |
| 20 | 0.026 | 20 | 0.01 |
| 20-50 | +6dB/octave | 20-50 | +1.33dB/octave |
| 50-800 | 0.16 | 50-700 | 0.015 |
| 800-2000 | -6dB/octave | 700-800 | +15.63dB/octave |
| 2000 | 0.026 | 800-925 | 0.03 |
| Overall GRMS | 14.1g | 2000 | 0.00644 |

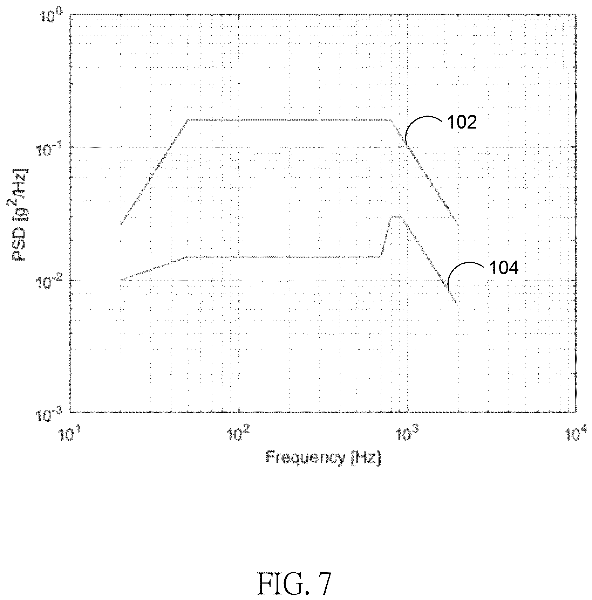

Please refer to Table (1) and FIG. 7, which are the comparison charts of random vibration power spectral density for the present application. The upper line segment 102 represents the random vibration power spectral density of the present application, and the lower line segment 104 is provided by SpaceX. It is observed that the maximum displacement of the present application is 3.76×10-2 millimeters, all within the maximum allowable range, thus proving that the radiation sensor 1 for deep space environment of the present application may withstand the vibrations produced during both launch and flight of the spacecraft.

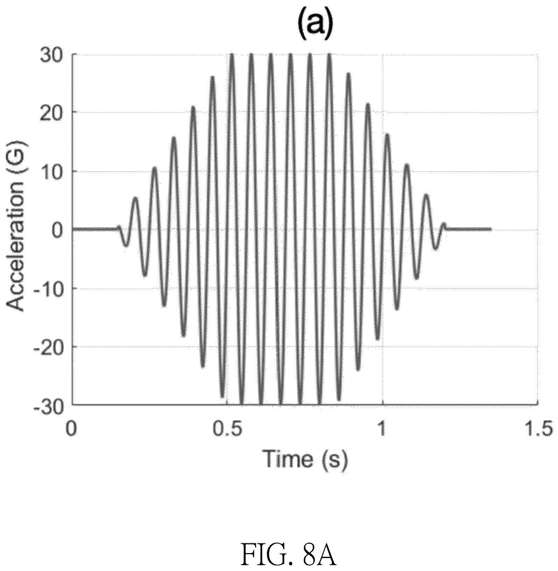

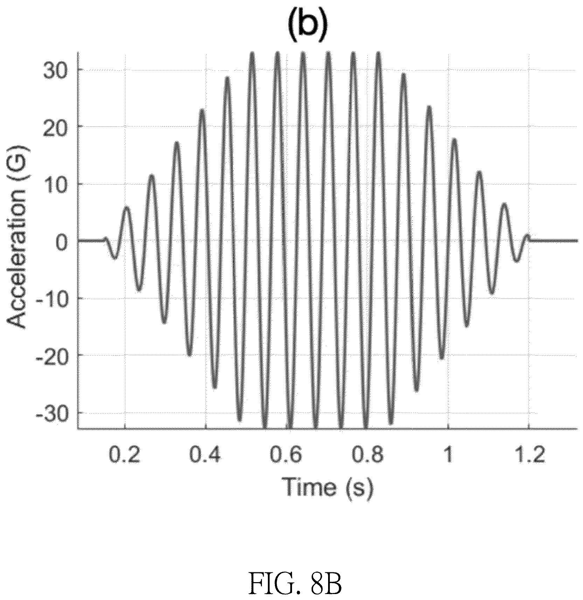

Please also refer to Table (1), FIG. 8A and FIG. 8B. FIG. 8A shows the sine test diagrams for the X and Y axes of the present application, and FIG. 8B shows the sine test diagram for the Z axis. As illustrated, a resonance check is conducted on the radiation sensor 1 for deep space environment of the present application. The sensor is fixed in different axial directions on the vibration table using fixtures, and sine vibrations as shown in FIG. 8A and FIG. 8B are performed. A sine test with an amplitude of 33G along the XY plane and a test amplitude of 30G along the Z axis are conducted. In this implementation, the radiation sensor 1 in the deep space environment underwent four different amplitude tests on three axes.

Continued to the above, after testing, the radiation sensor 1 for deep space environment of the present application was found to be 3dB below the qualified specifications, and it passed the functional test after being powered on. The radiation sensor 1 for deep space environment of the present application may not only withstand the vibrations produced during launch or flight but also resist the mechanical stress encountered during flight, and it continues to operate normally after enduring such mechanical stress.

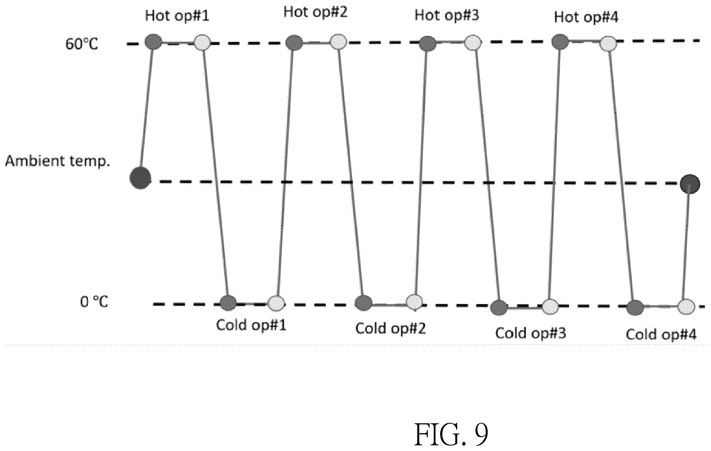

Continued to the above, please refer to FIG. 9, which is a schematic diagram of the thermal test of the present application. As shown in the figure, a temperature check is conducted on the radiation sensor 1 configured in deep space environments, focusing on the temperature-sensitive radiation sensing field-effect transistor 32. As illustrated, the test involves continuous hot soaking at 60 degrees Celsius for 4 hours and cold soaking at 0 degrees Celsius to perform thermal testing on the radiation sensing field-effect transistor 32. Functional tests are conducted before and after the soaking, which include transmitting and verifying a series of command executions involving telemetry requests and operational mode changes. During the hot and cold soaking periods, limited functional tests are performed, transmitting and verifying simplified commands, and every 30 seconds, a request command for those management data packets is sent to verify that its functionality remains intact.

The test results show that during the cooling phase, the radiation sensing field-effect transistor 32 exhibits sluggish response to commands and an abnormal increase in current. The anomalies only occur when the temperature approaches or is below the ambient temperature of the thermal vacuum chamber. It is necessary to turn off the power, increase the temperature, and then reconnect the power at room temperature to restore normal function.

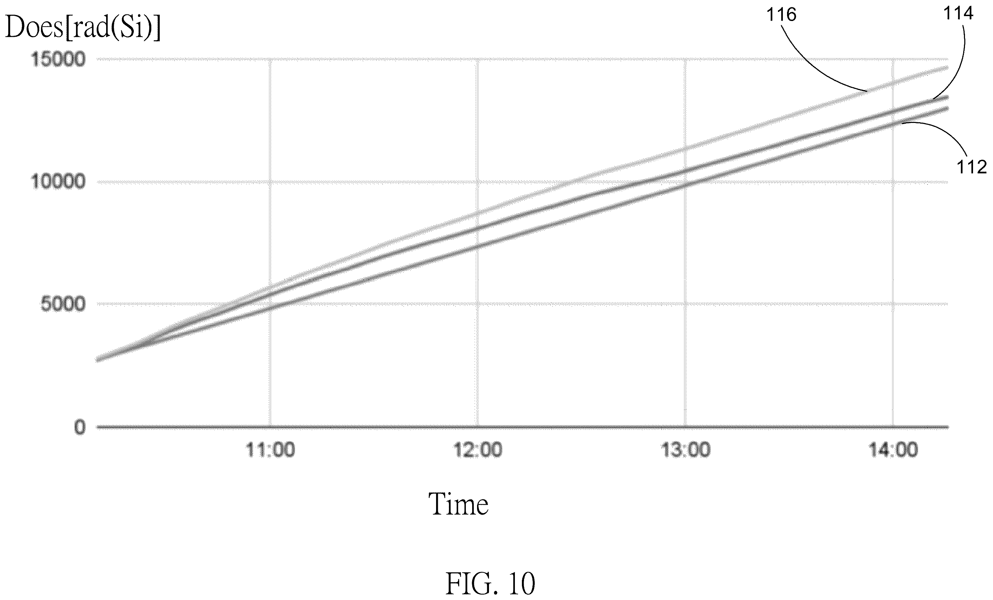

Subsequently, as the present application requires radiation sensing between high-intensity radiations, the radiation sensitive field-effect transistor readout module 30 needs to withstand radiation of 10,000 rads through a 1 mm aluminum shield. Therefore, radiation tests are conducted on the radiation sensor 1 as configured for deep space environments. Please refer to FIG. 10, which is a schematic diagram of the radiation test results of the present application. As shown, the present application tests two sets of radiation sensitive field-effect transistor readout modules 30, designated as segments 114 and 116, with segment 112 as the standard radiation value. It is observed that the errors in segments 114 and 116 under radiation exposure are quite small, with a radiation dose of 10,168 rads in the radiation test. Thus, it is evident that the present application may still detect radiation accurately even under a radiation intensity of 10,000 rads, with minimal error.

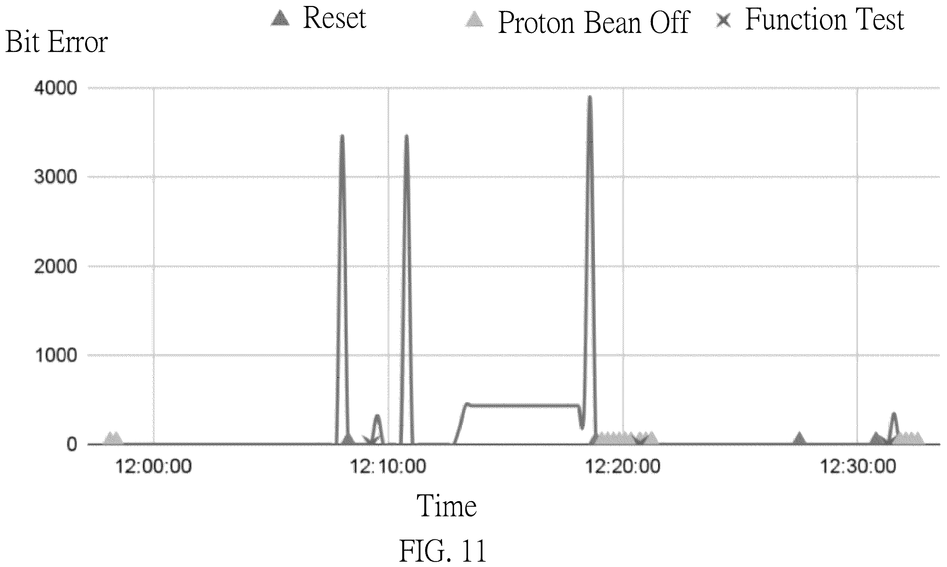

Subsequently, it is necessary to test whether the present application may withstand and resolve SEEs. Therefore, a proton beam generated by a cyclotron irradiates the radiation sensor 1 configured in deep space environments, as shown in FIG. 11, which is a schematic diagram of the proton beam irradiation test results of the present application. As illustrated, the DSRP value represents the number of bit errors produced by the irradiation of the proton beam, and the proton beam generated by the cyclotron has an average proton energy of about 221.2 MeV, an average proton flux of 1.32×10⁷ cm2s-1, a test duration of 33 minutes, a proton beam flux of 2.37×10¹⁰ cm-2, and a radiation dose of 1290 rads. During the test, there were no abnormal non-command recoveries or power cycles, indicating no occurrence of excessive current caused by single-event latch-up, thus proving that the radiation sensor 1 for the deep space environments may withstand proton impacts. A plurality of peaks may be observed, which are likely data errors caused by SEUs due to proton impacts, and these may also be resolved by the detection software 42 of the flash memory 40.

In the embodiment described above, the present application provides a radiation sensor for use in deep space environments. Through the detection software of the flash memory, it detects and repairs SEUs and logs radiation doses sensed by the radiation sensitive field-effect transistor readout module. A plurality of electronic fuses are configured to resolve excessive currents caused by single-event latch-ups. By utilizing a series of light-weighted parts, it reduces weight without affecting mechanical strength and uses the multi-layer insulation member for thermal insulation, enabling the radiation sensor to operate normally in extreme temperatures, strong vibrations, and excessive radiation environments, while remaining unaffected by SEEs, thus providing more reliable radiation sensing data for astronauts and space system engineers.

## Claims

1. A radiation sensor (1) for deep space, comprising:
a circuit board (10);
a payload control module (20), disposed on the circuit board (10), the payload control module (20) including a temperature sensing unit (22);
a radiation sensitive field-effect transistor readout module (30), disposed on the circuit board (10) and electrically connected to the payload control module (20), the temperature sensing circuit (22) measuring both temperatures of the temperature sensing circuit (22) and the radiation sensitive field-effect transistor readout module (30) and preventing voltage fluctuations unrelated to radiation in the radiation sensitive field-effect transistor readout module (30);
and
a flash memory (40), disposed on the circuit board (10) and electrically connected to the payload control module (20)) and the radiation sensitive field-effect transistor readout module (30), including a detection software (42);
wherein, the flash memory (40) stores a sensing data under an ionizing radiation environment from 0 rad to 100,000 rad, at least one bit of the sensing data is affected by a single event upset, caused by the ionizing radiation environment, the detection software (42) immediately detects and records a position of the bit affected by the single event upset, caused by the ionizing radiation, in the flash memory (40), and the detection software (42) resets the data affected by the single event upset, caused by the ionizing radiation environment, and records a quantity of bit errors.

2. The radiation sensor (1) for deep space of claim 1, further comprising:
a chassis (5), disposed around an outside of the circuit board (10), including a through hole located at a side and a first hollow section (9) set adjacent to the through hole;
a front plate member (80), disposed on the chassis (5), including a second hollow section (84); and
at least one fixed component (90), disposed between the front plate member (80) and the circuit board (10), the at least one fixed component configured to secure the circuit board (10) and space the circuit board (10) and the front plate member (80) by a first distance.

3. The radiation sensor (1) for deep space of claim 2, further comprises:
a plurality of thermal insulation collars (82), disposed on the front plate member (80).

4. The radiation sensor (1) for deep space of claim 1, further comprising:
an electrical interface (50), disposed on the circuit board (10) and electrically connected to the payload control module (20) and the radiation sensitive field-effect transistor readout module (30); and
a data interface (60), disposed on the circuit board (10) and electrically connected to the payload control module (20) and the radiation sensitive field-effect transistor readout module (30).

5. The radiation sensor (1) for deep space of claim 4, wherein the electrical interface (50) further comprising:
a transformer (52), electrically connected to the payload control module (20);
a first electronic fuse (54), electrically connected to the radiation sensitive field-effect transistor readout module (30); and
a second electronic fuse (56), electrically connected to the transformer (52);
wherein, the radiation sensitive field-effect transistor readout module (30) senses the radiation dose due to the ionizing radiation environment, and the first or second electronic fuse (54, 56) is configured to restore a single event latch-up due to the ionizing radiation environment through a power cycle.

6. The radiation sensor (1) for deep space of claim 5, wherein the first electronic fuse (54) is electrically connected to a first input power source (72), and the second electronic fuse (56) is electrically connected to a second input power source (74).

7. The radiation sensor (1) for deep space of claim 1, wherein the circuit board (10) is disposed in an aircraft, a rocket, or an artificial satellite.

8. The radiation sensor (1) for deep space of claim 2, wherein the front plate member (80) is disposed on a surface of an aircraft, a rocket, or an artificial satellite.

9. The radiation sensor (1) for deep space of claim 1, further comprising:
a multi-layer insulation member, placed on an exterior of the chassis (5), the multi-layer insulation member configured to regulate a temperature in the chassis (5).

10. The radiation sensor (1) for deep space of claim 1, wherein the chassis (5) is coated by a white coating with an ultraviolet ray resistance at a surface thereof.

## Patentansprüche

1. Strahlungssensor (1) für den Weltraum, welcher umfasst:
eine Leiterplatte (10);
ein Nutzlaststeuermodul (20), das an der Leiterplatte (10) angeordnet ist, wobei das Nutzlaststeuermodul (20) eine Temperaturerfassungseinheit (22) beinhaltet;
ein strahlungsempfindliches Feldeffekttransistor-Auslesemodul (30), das an der Leiterplatte (10) angeordnet ist und elektrisch mit dem Nutzlaststeuermodul (20) verbunden ist, wobei die Temperaturerfassungsschaltung (22) sowohl die Temperatur der Temperaturerfassungsschaltung (22) als auch die des strahlungsempfindlichen Feldeffekttransistor-Auslesemoduls (30) misst und Spannungsschwankungen in dem strahlungsempfindlichen Feldeffekttransistor-Auslesemodul (30) verhindert, die nicht auf Strahlung zurückzuführen sind; und
einen Flash-Speicher (40), der an der Leiterplatte (10) angeordnet ist und elektrisch mit dem Nutzlaststeuermodul (20)) und dem strahlungsempfindlichen Feldeffekttransistor-Auslesemodul (30) verbunden ist, und eine Detektionssoftware (42) beinhaltet;
wobei, der Flash-Speicher (40) Messdaten unter einer ionisierenden Strahlungsumgebung von 0 rad bis 100.000 rad speichert, mindestens ein Bit der Messdaten durch eine Einzelereignisstörung beeinträchtigt wird, die durch die ionisierende Strahlungsumgebung verursacht wird, wobei die Detektionssoftware (42) eine Position des Bits, das durch die von der ionisierenden Strahlungsumgebung verursachte Einzelereignisstörung beeinträchtigt wird, sofort erfasst und aufzeichnet, in dem Flash-Speicher (40), und die Detektionssoftware (42) die Daten zurücksetzt, die von der durch die ionisierende Strahlungsumgebung verursachte Einzelereignisstörung betroffen sind, und eine Anzahl von Bitfehlern aufzeichnet.

2. Strahlungssensor (1) für den Weltraum nach Anspruch 1, welcher ferner umfasst:
ein Gehäuse (5), das um eine Außenseite der Leiterplatte (10) herum angeordnet ist, eine sich an einer Seite befindliche Durchgangsbohrung und einen ersten Hohlabschnitt (9) aufweist, der neben der Durchgangsbohrung liegt;
ein Frontplattenelement (80), das an dem Gehäuse (5) angeordnet ist, und einen zweiten Hohlabschnitt (84) beinhaltet; und
mindestens eine feste Komponente (90), die zwischen dem Frontplattenelement (80) und der Leiterplatte (10) angeordnet ist, wobei die mindestens eine feste Komponente so konfiguriert ist, dass sie die Leiterplatte (10) fixiert und die Leiterplatte (10) und das Frontplattenelement (80) in einem ersten Abstand voneinander beabstandet sind.

3. Strahlungssensor (1) für den Weltraum nach Anspruch 2, welcher ferner umfasst:
eine Vielzahl von Wärmeisolationsmanschetten (82), die an dem Frontplattenelement (80) angeordnet sind.

4. Strahlungssensor (1) für den Weltraum nach Anspruch 1, welcher ferner umfasst:
eine elektrische Schnittstelle (50), die an der Leiterplatte (10) angeordnet ist und elektrisch mit dem Nutzlaststeuermodul (20) und dem strahlungsempfindlichen Feldeffekttransistor-Auslesemodul (30) verbunden ist; und
eine Datenschnittstelle (60), die an der Leiterplatte (10) angeordnet ist und elektrisch mit dem Nutzlaststeuermodul (20) und dem strahlungsempfindlichen Feldeffekttransistor-Auslesemodul (30) verbunden ist.

5. Strahlungssensor (1) für den Weltraum nach Anspruch 4, bei welchem die elektrische Schnittstelle (50) ferner umfasst:
einen Transformator (52), der elektrisch mit dem Nutzlaststeuermodul (20) verbunden ist;
eine erste elektronische Sicherung (54), die elektrisch mit dem strahlungsempfindlichen Feldeffekttransistor-Auslesemodul (30) verbunden ist; und
eine zweite elektronische Sicherung (56), die elektrisch mit dem Transformator (52) verbunden ist;
wobei, das strahlungsempfindliche Feldeffekttransistor-Auslesemodul (30) die Strahlendosis aufgrund der ionisierenden Strahlungsumgebung erfasst, und die erste oder zweite elektronische Sicherung (54, 56) so konfiguriert ist, dass sie ein Einzelereignis-Latch-up aufgrund der ionisierenden Strahlungsumgebung durch einen Stromzyklus wiederherstellt.

6. Strahlungssensor (1) für den Weltraum nach Anspruch 5, bei welchem die erste elektronische Sicherung (54) elektrisch mit einer ersten Eingangsstromquelle (72) verbunden ist, und die zweite elektronische Sicherung (56) elektrisch mit einer zweiten Eingangsstromquelle (74) verbunden ist.

7. Strahlungssensor (1) für den Weltraum nach Anspruch 1, bei welchem die Leiterplatte (10) in einem Flugzeug, einer Rakete oder einem künstlichen Satelliten angeordnet ist.

8. Strahlungssensor (1) für den Weltraum nach Anspruch 2, bei welchem das Frontplattenelement (80) an einer Oberfläche eines Flugzeugs, einer Rakete oder eines künstlichen Satelliten angeordnet ist.

9. Strahlungssensor (1) für den Weltraum nach Anspruch 1, welcher ferner umfasst:
ein mehrlagiges Isolierelement, das an einer Außenseite des Gehäuses (5) platziert ist, wobei das mehrlagige Isolierelement zum Regulieren einer Temperatur in dem Gehäuse (5) konfiguriert ist.

10. Strahlungssensor (1) für den Weltraum nach Anspruch 1, bei welchem das Gehäuse (5) an einer Oberfläche desselben mit einer weißen Beschichtung beschichtet ist, die eine Beständigkeit gegen ultraviolette Strahlung aufweist.

## Revendications

1. Capteur de rayonnement (1) pour l'espace lointain, comprenant :
une carte de circuit (10) ;
un module de commande de charge utile (20), disposé sur la carte de circuit (10), le module de commande de charge utile (20) incluant une unité de détection de température (22) ;
un module de lecture à transistor à effet de champ sensible au rayonnement (30), disposé sur la carte de circuit (10) et connecté électriquement au module de commande de charge utile (20), le circuit de détection de température (22) mesurant à la fois des températures du circuit de détection de température (22) et du module de lecture à transistor à effet de champ sensible au rayonnement (30) et empêchant des fluctuations de tension non liées au rayonnement dans le module de lecture à transistor à effet de champ sensible au rayonnement (30) ; et
une mémoire flash (40), disposée sur la carte de circuit (10) et connectée électriquement au module de commande de charge utile (20) et au module de lecture à transistor à effet de champ sensible au rayonnement (30), incluant un logiciel de détection (42) ;
dans lequel la mémoire flash (40) stocke des données de détection dans un environnement de rayonnement ionisant de 0 rad à 100 000 rad, au moins un bit des données de détection est affecté par un renversement d'état provoqué par une particule unique, causée par l'environnement de rayonnement ionisant, le logiciel de détection (42) détecte et enregistre immédiatement une position du bit affecté par le renversement d'état provoqué par une particule unique, causé par le rayonnement ionisant, dans la mémoire flash (40), et le logiciel de détection (42) réinitialise les données affectées par le renversement d'état provoqué par une particule unique, causée par l'environnement de rayonnement ionisant, et enregistre une quantité d'erreurs de bit.

2. Capteur de rayonnement (1) pour l'espace lointain selon la revendication 1, comprenant en outre :
un châssis (5), disposé autour d'un extérieur de la carte de circuit (10), incluant un trou traversant situé sur un côté et une première section creuse (9) placée de manière adjacente au trou traversant ;
un organe de plaque avant (80), disposé sur le châssis (5), incluant une seconde section creuse (84) ; et
au moins un composant fixe (90), disposé entre l'organe de plaque avant (80) et la carte de circuit (10), l'au moins un composant fixe étant configuré pour fixer la carte de circuit (10) et espacer la carte de circuit (10) et l'organe de plaque avant (80) d'une première distance.

3. Capteur de rayonnement (1) pour l'espace lointain selon la revendication 2, comprenant en outre :
une pluralité de colliers d'isolation thermique (82), disposés sur l'organe de plaque avant (80).

4. Capteur de rayonnement (1) pour l'espace lointain selon la revendication 1, comprenant en outre :
une interface électrique (50), disposée sur la carte de circuit (10) et connectée électriquement au module de commande de charge utile (20) et au module de lecture à transistor à effet de champ sensible au rayonnement (30) ; et
une interface de données (60), disposée sur la carte de circuit (10) et connectée électriquement au module de commande de charge utile (20) et au module de lecture à transistor à effet de champ sensible au rayonnement (30).

5. Capteur de rayonnement (1) pour l'espace lointain selon la revendication 4, dans lequel l'interface électrique (50) comprend en outre :
un transformateur (52), connecté électriquement au module de commande de charge utile (20) ;
un premier fusible électronique (54), connecté électriquement au module de lecture à transistor à effet de champ sensible au rayonnement (30) ; et
un second fusible électronique (56), connecté électriquement au transformateur (52) ;
dans lequel le module de lecture à transistor à effet de champ sensible au rayonnement (30) détecte la dose de rayonnement due à l'environnement de rayonnement ionisant, et le premier ou second fusible électronique (54, 56) est configuré pour rétablir un verrouillage induit par une particule unique dû à l'environnement de rayonnement ionisant par un cycle d'alimentation.

6. Capteur de rayonnement (1) pour l'espace profond selon la revendication 5, dans lequel le premier fusible électronique (54) est connecté électriquement à une première source d'énergie d'entrée (72), et le second fusible électronique (56) est connecté électriquement à une seconde source d'alimentation d'entrée (74).

7. Capteur de rayonnement (1) pour l'espace lointain selon la revendication 1, dans lequel la carte de circuit (10) est disposée dans un aéronef, une fusée ou un satellite artificiel.

8. Capteur de rayonnement (1) pour l'espace lointain selon la revendication 2, dans lequel l'organe de plaque avant (80) est disposé sur une surface d'un aéronef, d'une fusée ou d'un satellite artificiel.

9. Capteur de rayonnement (1) pour l'espace lointain selon la revendication 1, comprenant en outre :
un organe d'isolation multicouche, placé sur un extérieur du châssis (5), l'organe d'isolation multicouche étant configuré pour réguler une température dans le châssis (5).

10. Capteur de rayonnement (1) pour l'espace profond selon la revendication 1, dans lequel le châssis (5) est revêtu d'un revêtement blanc avec une résistance aux rayons ultraviolets sur une surface de celui-ci.
